# EUROPEAN PATENT SPECIFICATION

(11) **EP 1 765 878 B1**
(45) Date of publication and mention of the grant of the patent: **08.12.2010**
(21) Application number: 05731942.8
(22) Date of filing: 06.04.2005
(51) Int. Cl.: C08F 2/50, C07F 9/53, C08F 283/01

(54) **PROCESS FOR PHOTOCURING WITH LIGHT EMITTING DIODES**
VERFAHREN ZUR PHOTOHÄRTUNG MIT LICHTEMITTIERENDEN DIODEN
PROCEDE DE PHOTODURCISSAGE AU MOYEN DE DIODES ELECTROLUMINESCENTES

(30) Priority: 15.04.2004 US 562513 P
(43) Date of publication of application: 28.03.2007
(73) Proprietor: BASF SE, 67056 Ludwigshafen (DE)
(72) Inventor: SITZMANN, Eugene Valentine, Newark, DE 19711 (US); WOSTRATZKY, Donald, West Chicago, IL 60185 (US); JANKAUSKAS, Jennifer, Hartsdale, NY 10530 (US); LOSAPIO, Greg, Mohegan Lake, NY 10547 (US)
(74) Representative: Bernhardt, Wolfgang Willy-Hans
(86) International application number: PCT/EP2005/051522
(87) International publication number: WO 2005/100408

(56) References cited:
- EP-A- 1 336 389
- US-A- 5 942 290

## Description

The present invention is aimed at a process for photocuring certain thick layer ethylenically unsaturated systems with a light emitting diode (LED) light source.

Light emitting diode light sources have been used for example for dental applications. For example as disclosed in U.S. Pat. apps. 2002113217, 2002115037 and 2001046652, CA 2332190, JP 2000271155, U.S. Pat. Nos. 6,200,134 and 6,159,005, EP 780104, EP 780103, U.S. Pat. Nos. 5,316,473 and 6,007,965.

It has been difficult to efficiently cure certain thick section coatings, gel coats, composites and adhesives. For example thick sections that are thicker than about 10 mils [= about 0.25 mm].

Surprisingly, the present process provides for good surface cure and good through cure without surface wrinkling for thick sections. Also surprisingly, the present process cures thick sections faster than thin layers. This is especially surprising as the opposite is true with conventional light sources such as ultraviolet or visible light.

Subject of the invention therefor is a process for curing ethylenically unsaturated polymerizable compounds,
which process comprises
adding to said compounds at least one acylphosphine oxide photoinitiator and irradiating the mixture so obtained with radiation from a light emitting diode source.

Advantageously, mixtures of monoacylphosphine oxide and bisacylphosphine oxide photoinitators are employed.

Also advantageously, mixtures of either monacylphosphine oxide or bisacylphosphine oxide photoinitators with α-hydroxyketone photoinitiators are employed.

Likewise, mixtures of monoacylphosphine oxide, bisacylphosphine oxide and α-hydroxyketone photoinitiators are employed.

In particular, the present process is suitable for thick coatings, thick gel coats, thick multi-ply composites or thick adhesive layers.

Thick coatings are greater than about 10 mils [= about 0.25 mm], for example from greater than 10 mils to about 30 mils [= about 0.76 mm]. The present thick coatings are for example coatings for metal, plastic or glass. The coatings are for example acrylate based coatings.

Present adhesives are thick layer adhesives, for example greater than about 10 mil, for example from greater than about 10 mil [= about 0.25 mm] to about 30 mil [= about 0.76 mm]. Adhesives are for example laminating, structure or pressure sensitive adhesives, such as for example pressure sensitive hot-melt adhesives.

Said adhesives can be hot melt adhesives as well waterborne or solvent borne adhesives. In particular suitable are pressure-sensitive adhesives, for example uv-curable hot melt pressure sensitive adhesives. Said adhesives for example comprise at least one rubber component, at least one resin component as tackyfier and at least one oil component, for example in the weight ratio 30:50:20. Suitable tackyfier are natural or synthetic resins. The person skilled in the art is aware of suitable corresponding compounds as well as of suitable oil components or rubbers.

The gel coats are also greater than about 10 mil [= about 0.25 mm], for example from greater than about 10 mil to about 30 mils [= about 0.76 mm] thick. The gel coats are typically white, containg high loading of TiO₂, for example between about 10% and about 25% by weight based on the entire formulation.

For example the present coatings, adhesive layers and gel coats are greater than about 11, 12, 13, 14 or greater than about 15 mil [greater than about 0.28, 0.31, 0.325, 0.36 or greater than about 0.38 mm].

Composites are multi-ply thick systems, for example from greater than about 25 mil [about 0.64 mm], for example from about 25 mil to about 300 mil [about 7.6 mm]. Composites comprise for example from about 2 to about 8 plys. Composite materials are for example styrenic polyesters, which may contain glass fibers and other assistants. The composite composition is made up of a self-supporting matrix material, for example a glass-fiber fabric, or else, for example, plant fibers (cf. K.-P. Mieck and T. Reussmann in Kunststoffe 85 (1995), 366-370), which is impregnated with the photocuring formulation. Shaped articles which are produced from composite compositions are of high mechanical stability and resistance.

Composites according to this invention are used for example in boats, chipboard or plywood panels coated on both sides with glass fiber-reinforced plastic, pipes, containers and the like. Other examples of composites are UP resin coatings for moldings containing glass fibers (GRP), e.g. corrugated sheets and paper laminates. Paper laminates may also be based on urea or melamine resins. The coating is produced on a support (for example a sheet) prior to the production of the laminate. A further advantage is that the composite composition can be removed in a part-cured, plastic state from the light source and can be shaped. Complete curing is carried out subsequently.

The present composites are for example clear.

The LED light sources according to the invention operate at low heat. For example the LED light sources operate at about 390 nm plus or minus 30 nm, at about 250 mW/cm². The LED light sources operate at low heat, for example below the bp of volatiles in the resin, for example below the bp of styrene at atmospheric pressure.

The acylphosphine oxide photoinitiators are disclosed for example in U.S. Pat. Nos. 4,324,744, 4,737,593, 5,942,290, 5,534,559, 6,020,528, 6,486,228 and 6,486,226, the relevant disclosure of which are hereby incorporated by reference.

The acylphosphine oxide photoinititors are bisacylphosphine oxides or monoacylphosphine oxides.

The bisacylphosphine oxide photoinitiators are of the formula I 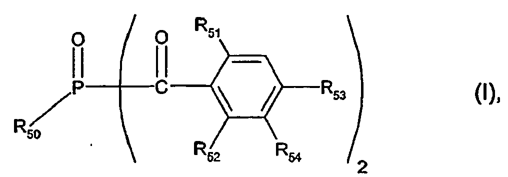 wherein **R₅₀** is C₁-C₁₂ alkyl, cyclohexyl or phenyl which is unsubstituted or is substituted by 1 to 4 halogen or C₁-C₈ alkyl;
**R₅₁** and **R₅₂** are each independently of the other C₁-C₈ alkyl or C₁-C₈alkoxy;
**R₅₃** is hydrogen or C₁-C₈ alkyl; and
**R₅₄** is hydrogen or methyl.

For example, R₅₀ is C₂-C₁₀ alkyl, cyclohexyl or phenyl which is unsubstituted or is substituted by 1 to 4 C₁-C₄ alkyl, Cl or Br.

Another embodiment is where R₅₀ is C₃-C₈ alkyl, cyclohexyl or phenyl which is unsubstituted or is substituted in the 2-, 3-, 4- or 2,5-positions by C₁-C₄ alkyl.

For instance, R₅₀ is C₄-C₁₂ alkyl or cyclohexyl, R₅₁ and R₅₂ are each independently of the other C₁-C₈ alkyl or C₁-C₈alkoxy and R₅₃ is hydrogen or C₁-C₈ alkyl.

For instance, R₅₁ and R₅₂ are C₁-C₄ alkyl or C₁-C₄alkoxy and R₅₃ is hydrogen or C₁-C₄ alkyl. Another emodiment is where R₅₁ and R₅₂ are methyl or methoxy and R₅₃ is hydrogen or methyl.

For example R₅₁, R₅₂ and R₅₃ are methyl.

Another embodiment is where R₅₁, R₅₂ and R₅₃ are methyl and R₅₄ is hydrogen.

Another embodiment is where R₅₀ is C₃-C₈ alkyl.

For example, R₅₁ and R₅₂ are methoxy, R₅₃ and R₅₄ are hydrogen and R₅₀ is isooctyl.

For instance R₅₀ is isobutyl.

For example R₅₀ is phenyl.

The present bisacylphosphine oxide photoinitiator is for example bis(2,4,6-trimethylbenzoyl)-phenylphosphine oxide (CAS# 162881-26-7) or is bis(2,4,6-trimethylbenzoyl)-(2,4-bis-pentyloxyphenyl)phosphine oxide.

The monoacylphosphine oxide photoinitiators are of the formula II 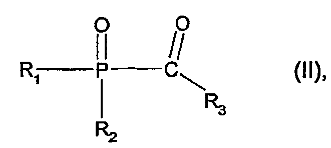 in which
**R₁** and **R₂** independently of one another are C₁-C₁₂alkyl, benzyl, phenyl which is unsubstituted or substituted from one to four times by halogen, C₁-C₈ alkyl and/or C₁-C₈ alkoxy, or are cyclohexyl or a group -COR₃, or
R₁ is -OR₄;
**R₃** is phenyl which is unsubstituted or substituted from one to four times by C₁-C₈ alkyl, C₁-C₈ alkoxy, C₁-C₈ alkylthio and/or halogen; and
**R₄** is C₁-C₈ alkyl, phenyl or benzyl.

For example, R₁ is -OR₄.

For example R₂ is phenyl which is unsubstituted or substituted from one to four times by halogen, C₁-C₈ alkyl and/or C₁-C₈ alkoxy.

For example R₃ is phenyl which is unsubstituted or substituted from one to four times by C₁-C₈alkyl.

For example, the present monoacylphosphine oxide is 2,4,6-trimethylbenzoylethoxyphenylphosphine oxide (CAS# 84434-11-7) or 2,4,6-trimethylbenzoyldiphenylphosphine oxide (CAS# 127090-72-6).

The present process may employ further photoinitiators, for example α-hydroxy ketone photoinitiators of the formula III 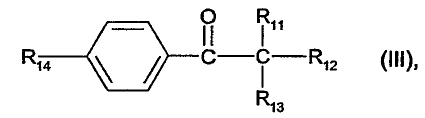 where
**R₁₁** and **R₁₂** independently of one another are hydrogen, C₁-C₆ alkyl, phenyl, C₁-C₆ alkoxy, OSiR₁₆(R₁₇)₂ or -O(CH₂CH₂O)_{q}-C₁-C₆ alkyl, or
R₁₁ and R₁₂, together with the carbon atom to which they are attached, form a cyclohexyl ring;
**q** is a number from 1 to 20;
**R₁₃** is OH, C₁-C₁₆ alkoxy or -O(CH₂CH₂O)_{q}-C₁-C₆ alkyl;
**R₁₄** is hydrogen, C₁-C₁₈ alkyl, C₁-C₁₂hydroxyalkyl, C₁-C₁₈ alkoxy, -OCH₂CH₂-OR₁₅, -CH=CH₂, -C(CH₃)=CH₂ or is 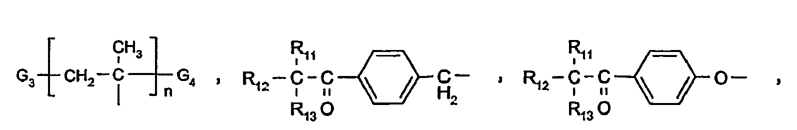 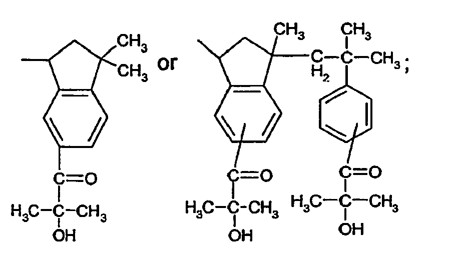 **n** is a number from 2 to 10;
**R₁₅** is hydrogen, -COCH=CH₂ or -COC(CH₃)=CH₂;
**R₁₆** and **R₁₇** independently of one another are C₁-C₈ alkyl or phenyl; and
**G₃** and **G₄** independently of one another are end groups of the polymeric structure, preferably hydrogen or methyl.

α-Hydroxy ketone photoinitiators that are of interest are those in which R₁₁ and R₁₂ independently of one another are hydrogen, C₁-C₆ alkyl or phenyl or R₁₁ and R₁₂, together with the carbon atom to which they are attached, form a cyclohexyl ring, R₁₃ is OH, and R₁₄ is hydrogen, C₁-C₁₂ alkyl, C₁-C₁₂ alkoxy, -OCH₂CH₂OR₁₅, -C(CH₃)=CH₂ or is 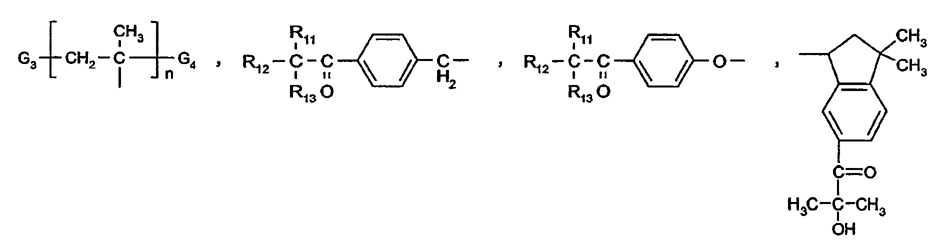 or

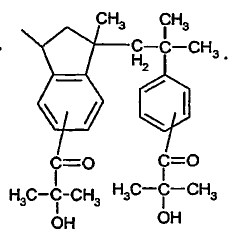

For example, suitable as the α-hydroxy ketone photoinitiators are those in which R₁₁ and R₁₂ independently of one another are methyl or ethyl or R₁₁ and R₁₂, together with the carbon atom to which they are attached, form a cyclohexyl ring, R₁₃ is hydrogen and R₁₄ is hydrogen, C₁-C₄ alkyl, C₁-C₄ alkoxy or -OCH₂CH₂OH.

Interesting also are compounds, wherein R₁₄ is

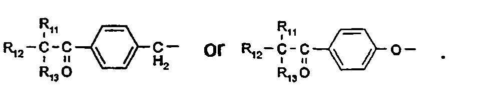

For instance, suitable α-hydroxy ketone photoinitiators are
α-hydroxycyclohexyl phenyl ketone,
2-hydroxy-2-methyl-1-phenylpropanone,
2-hydroxy-2-methyl-1-(4-isopropylphenyl)propanone,
2-hydroxy-2-methyl-1-(4-dodecylphenyl)propanone,
2-Hydroxy-1-{4-[4-(2-hydroxy-2-methyl-propionyl)-benzyl]-phenyl}-2-methyl-propan-1-one and
2-hydroxy-2-methyl-1-[(2-hydroxyethoxy)phenyl]propanone.

The present α-hydroxy ketone photoinitiator is for example α-hydroxycyclohexylphenyl ketone or 2-hydroxy-2-methyl-1-phenyl-1-propanone.

Straight or branched chain alkyl is for example, methyl, ethyl, propyl, isopropyl, butyl, isobutyl, sec-butyl, tert-butyl, pentyl, isopentyl, isooctyl, hexyl, heptyl, octyl, nonyl, decyl or dodecyl. Likewise alkoxy or alkylthio are of the same straight or branched chains.

Suitable photoinitiator blends (PI blends) are for example disclosed in U.S. Pat. No. 6,020,528 and U.S. Pat. app. No. 60/498,848, filed August 29, 2003, the disclosure of which are hereby incorporated by reference.

The present PI (photoinitiator) blends are for example a mixture of bis(2,4,6-trimethylbenzoyl)phenylphosphine oxide (CAS# 162881-26-7) and 2,4,6,-trimethylbenzoylethoxyphenylphosphine oxide (CAS# 84434-11-7) in weight:weight ratios of about 1:11, 1:10, 1:9, 1:8 or 1:7.

Another especially suitable PI blend is a mixture of bis(2,4,6-trimethylbenzoyl)phenylphosphine oxide, 2,4,6,-trimethylbenzoylethoxyphenylphosphine oxide and 2-hydroxy-2-methyl-1-phenyl-1-propanone (CAS# 7473-98-5) in weight ratios of for instance about 3:1:15 or 3:1:16 or 4:1:15 or 4:1:16.

Another suitable PI blend is a mixture of bis(2,4,6-trimethylbenzoyl)phenylphosphine oxide and 2-hydroxy-2-methyl-1-phenyl-1-propanone in weight ratios of for instance about 1:3, 1:4 or 1:5.

The present acylphosphine oxide PI or PI blend is present in the radiation-curable compostions from about 0.2 to about 10% by weight, based on the weight of the composition. For instance, the PI or PI blend is present from about 0.5 to about 8%, about 1 to about 7%, or about 2, 3, 4, 5 or 6% by weight based on the weight of the radiation-curable composition.

Other suitable photoinititors according to this invention are for or example, other mono- or bisacylphosphinoxides such as diphenyl-2,4,6-trimethylbenzoylphosphine oxide or bis(2,6-dimethoxybenzoyl)-2,4,4-trimethylpentylphosphineoxide; α-hydroxyketones, such as 1-hydroxycyclohexylphenylketone or 2-hydroxy-1-[4-(2-hydroxyethoxy)phenyl]-2-methyl-1-propanone; α-aminoketones, such as 2-methyl-1-[4-(methylthio)phenyl]-2-(4-morpholinyl)-1-propanone, 2-benzyl-2-(dimethylamino)-1-[4-(4-morpholinyl)phenyl]-1-butanone, 2-(4-methylbenzyl-2-(dimethylamino)-1-[4-(4-morpholinyl)phenyl]-1-butanone or 2-benzyl-2-(dimethylamino)-1-[3,4-dimethoxyphenyl]-1-butanone; benzophenones, such as benzophenone, 2,4,6-trimethylbenzophenone, 4-methylbenzophenone, 2-methylbenzophenone, 2-methoxycarbonylbenzophenone, 4,4'-bis(chloromethyl)-benzophenone, 4-chlorobenzophenone, 4-phenylbenzophenone, 4,4'-bis(dimethylamino)-benzophenone, 4,4'-bis(diethylamino)benzophenone, methyl2-benzoylbenzoate, 3,3'-dimethyl-4-methoxybenzophenone, 4-(4-methylphenylthio)benzophenone, 2,4,6-trimethyl-4'-phenyl-benzophenone or 3-methyl-4'-phenyl-benzophenone; ketal compounds, for example 2,2-dimethoxy-1,2-diphenyl-ethanone; and monomeric or dimeric phenylglyoxylic acid esters, such as methylphenylglyoxylic acid ester, 5,5'-oxo-di(ethyleneoxydicarbonylphenyl) or 1,2-(benzoylcarboxy)ethane.

Other suitable photoinitiators according to this invention, with or without acylphosphine oxide photoinitiators, are for example oxime esters as disclosed in U.S. Pat. No. 6,596,445, the disclosure of which is hereby incorporated by reference. A suitable oxime ester photoinitiator is for example

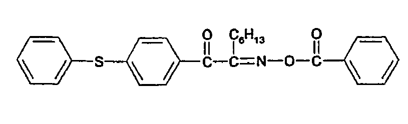

Another class of suitable photoinitiators according to this invention, with or without acylphosphine oxide photoinitiators, are for example phenyl glyoxalates, for example as disclosed in U.S. Pat. No. 6,048,660, the disclosure of which is hereby incorporated by reference. For example phenyl glyoxalates of the formula 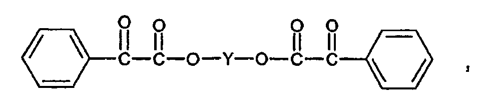 wherein Y is C₁-C₁₂alkylene, cyclohexlyene, C₂-C₄₀alkylene interrupted one or more times by cyclohexylene, O, S, or NR₃₀, and R₃₀ is hydrogen, C₁-C₁₂alkyl or phenyl, preferably Y is CH₂CH₂-O-CH₂CH₂.

The photopolymerizable mixtures may contain various additives in addition to the photoinitiator. Examples of these are thermal inhibitors, which are intended to prevent premature polymerization, examples being hydroquinone, hydroquinone derivatives, p-methoxyphenol, beta-naphthol or sterically hindered phenols, such as 2,6-di(tert-butyl)-p-cresol. The shelf life in the dark can be increased, for example, by using copper compounds, such as copper naphthenate, copper stearate or copper octoate, phosphorus compounds, for example triphenylphosphine, tributylphosphine, triethyl phosphite, triphenyl phosphite or tribenzyl phosphite, quaternary ammonium compounds, such as tetramethylammonium chloride or trimethylbenzylammonium chloride, or hydroxylamine derivatives, such as N-diethylhydroxylamine. In order to keep out atmospheric oxygen during the polymerization, paraffin or similar waxlike substances can be added; these migrate to the surface on commencement of the polymerization because of their low solubility in the polymer, and form a transparent surface layer which prevents the ingress of air. It is likewise possible to apply an oxygen barrier layer. Light stabilizers which can be added are UV absorbers, for example well known commercial UV absorbers of the hydroxyphenylbenzotriazole, hydroxyphenyl-benzophenone, oxalamide or hydroxyphenyl-s-triazine type. It is possible to use individual such compounds or mixtures thereof, with or without the use of sterically hindered amine light stabilizers (HALS). Sterically hindered amines are for example based on 2,2,6,6-tetramethylpiperidine.

UV absorbers and sterically hindered amines are for example:
2-(2-Hydroxyphenyl)-2H-benzotriazoles, for example known commercial hydroxyphenyl-2H-benzotriazoles and benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,563,242; 5,574,166; 5,607,987, 5,977,219 and 6,166,218 such as 2-(2-hydroxy-5-methylphenyl)-2H-benzotriazole, 2-(3,5-di-t-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-α-cumyl-2-hydroxyphenyl)-2H-benzotriazole, 2-(3-t-butyl-2-hydroxy-5-(2-(ω-hydroxy-octa-(ethyleneoxy)carbonyl-ethyl)-, phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyloxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-α-cumylphenyl)-2H-benzotriazole, 5-chloro-2-(2-hydroxy-3,5-di-α-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isooctyloxycarbonylethyl)phenyl)-5-chloro-2H-benzotriazole, 5-trifluoromethyl-2-(2-hydroxy-3-α-cumyl-5-t-octylphenyl)-2H-benzotriazole, 5-trifluoromethyl-2-(2-hydroxy-5-t-octylphenyl)-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-α-cumyl-5-t-octylphenyl)-2H-benzotriazole, 5-trifluoromethyl-2-(2-hydroxy-3-α-cumyl-5-t-butylphenyl)-2H-benzotriazole, 5-trifluoromethyl-2-(2-hydroxy-3,5-dit-butylphenyl)-2H-benzotriazole, 5-trifluoromethyl-2-(2-hydroxy-3,5-di-α-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole.
2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
Esters of substituted and unsubstituted benzoic acids, as for example 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
Acrylates and malonates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, Sanduvor^{®} PR25, dimethyl p-methoxybenzylidenemalonate (CAS# 7443-25-6), and Sanduvor^{®} PR31, di-(1,2,2,6,6-pentamethylpiperidin-4-yl) p-methoxybenzylidenemalonate (CAS #147783-69-5).
Sterically hindered amine stabilizers, for example 4-hydroxy-2,2,6,6-tetramethylpiperidine, 1-allyl-4-hydroxy-2,2,6,6-tetramethylpiperidine, 1-benzyl-4-hydroxy-2,2,6,6-tetramethylpiperidine, bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(1-octyloxy-2,2,6,6-tetramethyl-4-piperidyl) sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro[4.5]decan-2,4-dione, bis(1-octyloxy-2,2,6,6-tetramethylpiperidyl) sebacate, bis(1-octyloxy-2,2,6,6-tetramethylpiperidyl) succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triaza-spiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrcolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-di-chloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-di-aza-4-oxo-spiro[4,5]decane, a reaction product of 7,7,9,9-tetramethyl-2-cycloundecyl-1-oxa-3,8-diaza-4-oxospiro [4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine.

The sterically hindered amine may also be one of the compounds described in U.S. Pat. No. 5,980,783. The sterically hindered amine may also be one of the compounds described in U.S. Pat. Nos. 6,046,304 and 6,297,299, the disclosures of which are hereby incorporated by reference.

Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hexadecanoyloxy-2,2,6,6-tetramethylpiperidine, the reaction product of 1-oxyl-4-hydroxy-2,2,6,6-tetramethylpiperidine with a carbon radical from t-amylalcohol, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetramethylpiperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.

Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides. Tris-aryl-o-hydroxyphenyl-s-triazines, for example known commercial tris-aryl-o-hydroxyphenyl-s-triazines and triazines as disclosed in, United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,736,597; 5,942,626; 5,959,008; 5,998,116; 6,013,704; 6,060,543; 6,187,919; 6,242,598 and 6,468,958, for example 4,6-bis-(2,4-dimethylphenyl)-2-(2-hydroxy-4-octyloxyphenyl)-s-triazine, Cyasorb^{®} 1164, Cytec Corp, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylideneoxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine, 2,4-bis(2,4-dimethylphenyl)-6-[2-hydroxy-4-(3-benzyloxy-2-hydroxypropyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxypropyloxy)-5-α-cumylphenyl]-s-triazine (* denotes a mixture of octyloxy, nonyloxy and decyloxy groups), methylenebis-(2,4-bis(2,4-dimethylphenyl)-6-[2-hydroxy-4-(3-butyloxy-2-hydroxypropoxy)phenyl]-s-triazinel, methylene bridged dimer mixture bridged in the 3:5', 5:5' and 3:3' positions in a 5:4:1 ratio, 2,4,6-tris(2-hydroxy-4-isooctyloxycarbonyl-isopropylideneoxyphenyl)-s-triazine, 2,4-bis(2,4-dimethylphenyl)-6-(2-hydroxy-4-hexyloxy-5-α-cumylphenyl)-s-triazine, 2-(2,4,6-trimethylphenyl)-4,6-bis[2-hydroxy-4-(3-butyloxy-2-hydroxypropyloxy)phenyl]-s-triazine, 2,4,6-tris[2-hydroxy-4-(3-sec-butyloxy-2-hydroxypropyloxy)-phenyl]-s-triazine, mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, Tinuvin^{®} 400, Ciba Specialty Chemicals Corp., 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.

To accelerate the photopolymerization it is possible to add amines, for example triethanolamine, N-methyldiethanolamine, ethyl p-dimethylaminobenzoate or Michler's ketone. The action of the amines can be intensified by the addition of aromatic ketones of the benzophenone type. Examples of amines which can be used as oxygen scavengers are substituted N,N-dialkylanilines as described in EP-A-339 841. Further accelerators, coinitiators and autoxidizers are thiols, thioethers, disulfides and phosphines, as are described, for example, in EP-A-438 123 and GB-A-2 180 358.

The photopolymerization can also be accelerated by the addition of photosensitizers, which shift or broaden the spectral sensitivity. These are, in particular, aromatic carbonyl compounds, such as benzophenone derivatives, thioxanthone derivatives, anthraquinone derivatives and 3-acylcoumarin derivatives, and also 3-(aroylmethylene)thiazolines, and also eosine, rhodamine and erythrosine dyes.

The curing procedure can be assisted, in particular, by compositions which are pigmented (for example with titanium dioxide), and also by adding a component which forms free radicals under thermal conditions, for example an azo compound such as 2,2'-azobis(4-methoxy-2,4-dimethylvaleronitrile), a triazene, a diazo sulfide, a pentazadiene or a peroxy compound, such as a hydroperoxide or peroxycarbonate, for example t-butyl hydroperoxide, as described in U.S. Pat. No. 4,753,817.

The novel compositions can also include a photoreducible dye, for example xanthene, benzoxanthene, benzothioxanthene, thiazine, pyronine, porphyrin or acridine dyes, and/or a trihalomethyl compound which can be cleaved by radiation. Similar compositions are described, for example, in U.S. Pat. No. 5,229,253.

Other conventional additives are -depending on the intended application- fluorescent whiteners, fillers, pigments, dyes, wetting agents or levelling assistants. Thick and pigmented coatings can also contain glass microbeads or powdered glass fibers, as described in U.S. Pat. No. 5,013,768, for example.

The ethylenically unsaturated polymerizable compounds can contain one or more than one olefinic double bond. They may be low molecular (monomeric) or high molecular (oligomeric) compounds.

Typical examples of monomers containing one double bond are alkyl or hydroxyalkyl acrylates or methacrylates, for example methyl, ethyl, butyl, 2-ethylhexyl and 2-hydroxyethyl acrylate, isobornyl acrylate, and methyl and ethyl methacrylate. Further examples of these monomers are acrylonitrile, acrylamide, methacrylamide, N-substituted (meth)acrylamides, vinyl esters such as vinyl acetate, vinyl ethers such as isobutyl vinyl ether, styrene, alkylstyrenes, halostyrenes, N-vinylpyrrolidone, vinyl chloride and vinylidene chloride.

Examples of monomers containing more than one double bond are ethylene glycol diacrylate, propylene glycol diacrylate, neopentyl glycol diacrylate, hexamethylene glycol diacrylate, bisphenol A diacrylate, 4,4'-bis(2-acryloyloxyethoxy)diphenylpropane, trimethylolpropane triacrylate, pentaerythritol triacrylate and tetraacrylate, pentaerythritol divinyl ether, vinyl acrylate, divinyl benzene, divinyl succinate, diallyl phthalate, triallyl phosphate, triallyl isocyanurate or tris(2-acryloylethyl)isocyanurate. Examples of high molecular weight (oligomeric) polyunsaturated compounds are acrylated epoxy resins, acrylated polyethers, acrylated polyurethanes and acrylated polyesters. Further examples of unsaturated oligomers are unsaturated polyester resins, which are usually prepared from maleic acid, phthalic acid and one or more diols and which have molecular weights of greater than about 500. Unsaturated oligomers of this type are also known as prepolymers.

Typical examples of unsaturated compounds are esters of ethylenically unsaturated carboxylic acids and polyols or polyepoxides, and polymers containing ethylenically unsaturated groups in the chain or in side groups, including unsaturated polyesters, polyamides and polyurethanes and copolymers thereof, polybutadiene and butadiene copolymers, polyisoprene and isoprene copolymers, polymers and copolymers containing (meth)acrylic groups in side-chains, as well as mixtures of one or more than one such polymer.

Illustrative examples of unsaturated carboxylic acids are acrylic acid, methacrylic acid, crotonic acid, itaconic acid, cinnamic acid, unsaturated fatty acids such as linolenic acid or oleic acid.

Suitable polyols are aromatic, aliphatic and cycloaliphatic polyols. Aromatic polyols are typically hydroquinone, 4,4'-dihydroxydiphenyl, 2,2-bis(4-hydroxyphenyl)propane, as well as novolacs and cresols. Polyepoxides include those based on the cited polyols, for instance on the aromatic polyols and epichlorohydrin. Further suitable polyols are polymers and copolymers which contain hydroxyl groups in the polymer chain or in side groups, for example polyvinyl alcohol and copolymers thereof or hydroxyalkyl polymethacrylates or copolymers thereof. Other suitable polyols are oligoesters carrying hydroxyl end groups. Illustrative examples of aliphatic and cycloaliphatic polyols are alkylenediols containing for example 2 to 12 carbon atoms, including ethylene glycol, 1,2- or 1,3-propanediol, 1,2-, 1,3-or 1,4-butanediol, pentanediol, hexanediol, octanediol, dodecanediol, diethylene glycol, triethylene glycol, polyethylene glycols having molecular weights of for instance 200 to 1500, 1,3-cyclopentanediol, 1,2-, 1,3-or 1,4-cyclohexanediol, 1,4-dihydroxymethylcyclohexane, glycerol, tris( -hydroxyethyl)amine, trimethylolethane, trimethylolpropane, pentaerythritol, dipentaerythritol and sorbitol.

The polyols may be esterified partially or completely with one or with different unsaturated carboxylic acids, in which case the free hydroxyl groups of the partial esters may be modified, for example etherified, or esterified with other carboxylic acids.

Illustrative examples of esters are: Trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentacrylate, dipentaerythritol hexacrylate, tripentaerythritol octacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentacrylate, sorbitol hexacrylate, oligoester acrylates and methacrylates, glycerol di- and-triacrylate, 1,4-cyclohexanediacrylate, bisacrylates and bismethacrylates of polyethylene glycol having molecular weights of 200 to 1500, or mixtures thereof. Polyfunctional monomers and oligomers are available for example from UCB Chemicals, Smyrna, Georgia, and Sartomer, Exton, Pennsylvania.

Suitable ethylenically unsaturated polymerizable compounds are also the amides of identical or different unsaturated carboxylic acids of aromatic, cycloaliphatic and aliphatic polyamines containing for instance 2 to 6, for example 2 to 4, amino groups. Exemplary of such polyamines are ethylenediamine, 1,2- or 1,3-propylenediamine, 1,2-, 1,3-or 1,4-butylenediamine, 1,5-pentylenediamine, 1,6-hexylenediamine, octylenediamine, dodecylenediamine, 1,4-diaminocyclohexane, isophoronediamine, phenylenediamine, bisphenylenediamine, bis-(β-aminoethyl) ether, diethylenetriamine, triethylenetetramine, bis(β-aminoethoxy)ethane or bis(β-aminopropoxy)ethane. Other suitable polyamines are polymers and copolymers which may contain additional amino groups in the side-chain and oligoamides containing amino end groups.

Exemplary of such unsaturated amides are: methylenebisacrylamide, 1,6-hexamethylenebisacrylamide, diethylenetriaminetrismethacrylamide, bis(methacrylamidopropoxy)ethane, β-methacrylamidoethylmethacrylate, N-[(β-hydroxyethoxy)ethyl]acrylamide.

Suitable unsaturated polyesters and polyamides are derived typically from maleic acid and diols or diamines. Maleic acid can be partially replaced by other dicarboxylic acids such as fumaric acid, itaconic acid, citraconic acid, mesaconic acid or chloromaleic acid. To control the reactivity of the polyester and to influence the crosslinking density and hence the product properties, it is possible to use in addition to the unsaturated dicarboxylic acids different amounts of saturated dicarboxylic acids such as phthalic acid, isophthalic acid, terephthalic acid, tetrahydrophthalic acid, succinic acid or adipic acid. The unsaturated polyesters can be used together with ethylenically unsaturated comonomers such as styrene. The polyesters and polyamides can also be derived from dicarboxylic acids and ethylenically unsaturated diols or diamines, especially from those with long chains containing typically from 6 to 20 carbon atoms. Polyurethanes are typically those derived from saturated or unsaturated diisocyanates and unsaturated and saturated diols.

Suitable polyester acrylates or acrylated polyesters are obtained by reacting oligomers, typically epoxides, urethanes, polyethers or polyesters, with acrylates such as hydroxyethyl acrylate or hydroxypropyl acrylate.

Polybutadiene and polyisoprene and copolymers thereof are known. Suitable comonomers include olefins such as ethylene, propene, butene, hexene, (meth)acrylates, acrylonitrile, styrene or vinyl chloride. Polymers containing (meth)acrylate groups in the side-chain are also known. They may typically be reaction products of epoxy resins based on novolak with (meth)acrylic acid, homo- or copolymers of polyvinyl alcohol or their hydroxyalkyl derivatives which are esterified with (meth)acrylic acid or homo- and copolymers of (meth)acrylates which are esterified with hydroxyalkyl(meth)acrylates.

Monomers are for instance alkyl- or hydroxyalkyl acrylates or methacrylates, styrene, ethylene glycol diacrylate, propylene glycol diacrylate, neopentyl glycol diacrylate, hexamethylene glycol diacrylate or bisphenol A diacrylate, 4,4'-bis(2-acryloyloxyethoxy)diphenylpropane, trimethylolpropane triacrylate, pentaerythritol triacrylate or tetraacrylate, for instance acrylates, styrene, hexamethylene glycol or bisphenol A diacrylate, 4,4'-bis(2-acryloyloxyethoxy)diphenylpropane or trimethylolpropane triacrylate.

Oligomeric polyunsaturated compounds are for instance polyester acrylates or unsaturated polyester resins which are prepared from maleic acid, fumaric acid, phthalic acid and one or more than one diol, and which typically have molecular weights from about 500 to 3000.

Unsaturated carboxylic acids are for example acrylic acid and methacrylic acid.

The photopolymerizable compounds are used by themselves or in any desired mixtures. It is suitable to use mixtures of polyol(meth)acrylates.

Binders may also be added to the unsaturated photopolymerizable compounds. The addition of binders is particularly useful if the photopolymerizable compounds are liquid or viscous substances. The amount of binder may be from 5-95, for example 10-90, for instance 40-90, percent by weight, based on the entire composition. The choice of binder will depend on the field of use and the desired properties therefore, such as the ability of the compositions to be developed in aqueous and organic solvent systems, adhesion to substrates and susceptibility to oxygen.

Suitable binders are typically polymers having a molecular weight of about 5,000 to 2,000,000, for instance 10,000 to 1,000,000. Illustrative examples are: Homo- and copolymers of acrylates and methacrylates, including copolymers of methyl methacrylate/ethyl acrylate/methacrylic acid, poly(alkylmethacrylates), poly(alkylacrylates); cellulose esters and ethers such as cellulose acetate, cellulose acetobutyrate, methyl cellulose, ethyl cellulose; polyvinyl butyral, polyvinyl formal, cyclized rubber, polyethers such as polyethylene oxide, polypropylene oxide, polytetrahydrofuran; polystyrene, polycarbonate, polyurethane, chlorinated polyolefins, polyvinyl chloride, copolymers of vinyl chloride/vinylidene chloride, copolymers of vinylidene chloride with acrylonitrile, methyl methacrylate and vinyl acetate, polyvinyl acetate, copoly(ethylene/vinyl acetate), polymers such as polycaprolactam and poly(hexamethylene adipamide), polyesters such as poly(ethylene glycol terephthalate) and poly(hexamethylene glycol succinate).

The unsaturated compounds can also be used in admixture with non-photopolymerizable film-forming components. These components may be physically drying polymers or solutions thereof in organic solvents, for example nitrocellulose or cellulose acetobutyrate. The photopolymerizable unsaturated monomers may be a component of a free radical-ionic curable blend, such as a free radical-cationic curable blend. Also of importance are systems that undergo both thermal and photo-induced curing cycles, such as are used in powder coatings, laminates, certain adhesives and conformal coatings.

Mixtures of a prepolymer with polyunsaturated monomers which, additionally contain a further unsaturated monomer are suitable. The prepolymer in this instance primarily determines the properties of the film and, by varying it, the skilled person can influence the properties of the cured film. The polyunsaturated monomer acts as crosslinking agent that renders the film insoluble. The mono-unsaturated monomer acts as reactive diluent with the aid of which the viscosity is lowered without having to use a solvent. Moreover, properties of the cured composition such as curing rate, crosslinking density and surface properties are dependent on the choice of monomer.

Unsaturated polyester resins are usually used in two-component systems, together with a mono-unsaturated monomer, for example with styrene.

Binary electron-rich/electron-poor monomer systems are often employed in thick pigmented coatings. For example, vinyl ether/unsaturated polyester systems are employed in powder coatings and styrene/unsaturated polyester systems are used in gel coats.

A suitable process is that wherein the ethylenically unsaturated polymerizable compounds are a mixture of at least one oligomeric compound and at least one monomer.

An interesting process is that wherein the ethylenically unsaturated polymerizable compounds are a mixture of 1) unsaturated polyesters, especially those that are prepared from maleic acid, fumaric acid and/or phthalic acid and one or more than one diol, and which have molecular weights of 500 to 3,000, and 2) acrylates, methacrylates or styrene or combinations thereof.

An important process is also that wherein the ethylenically unsaturated polymerizable compounds are a mixture of 1) unsaturated polyesters and 2) acrylates or methacrylates or combinations thereof.

Another interesting process is that wherein the ethylenically unsaturated polymerizable compounds are a mixture of 1) unsaturated polyester acrylates and 2) acrylates or methacrylates or combinations thereof.

Coating of the substrates can be carried out by applying to the substrate a liquid composition, a solution or a suspension. The choice of solvents and the concentration depend principally on the type of composition and on the coating technique. The solvent should be inert, i.e. it should not undergo a chemical reaction with the components and should be able to be removed again, after coating, in the course of drying. Examples of suitable solvents are ketones, ethers and esters, such as methyl ethyl ketone, isobutyl methyl ketone, cyclopentanone, cyclohexanone, N-methylpyrrolidone, dioxane, tetrahydrofuran, 2-methoxyethanol, 2-ethoxyethanol, 1-methoxy-2-propanol, 1,2-dimethoxyethane, ethyl acetate, n-butyl acetate and ethyl 3-ethoxypropionate. The solution is applied uniformly to a substrate by means of known coating techniques, for example by spin coating, dip coating, knife coating, curtain coating, brushing, spraying, especially by electrostatic spraying, and reverse-roll coating. It is also possible to apply the photosensitive layer to a temporary, flexible support and then to coat the final substrate, for example a copper-clad circuit board, by transferring the layer via lamination.

The invention is further described in the following Examples. Unless otherwise indicated, parts and percentages are by weight, based on the weight of the entire formulation.

### Example 1 - gel coat:

A gel coat formulation consists of an unsaturated polyester oligomer with a styrene diluent added to control viscosity. Styrene is present at 35 % by weight, based on the weight of the entire formulation. The other components are rutile TiO₂, 15% by weight and as photoinitiator, bis(2,4,6-trimethylbenzoyl)phenylphosphine, 2% by weight. The mixture is drawn down on the glass substrate and cured to a glassy solid state. The LED source has a narrow output between 380 and 400 nm, CW power of 250 mW/cm². Lamp distance is about 12 mm above the sample. The film thickness is about 20 mils.

### Example 2 - composite:

A glass filled composite formulation is prepared, 2 ply = 55 mil [1.4 mm] thickness, 8 ply = 274 mil [7 mm] thickness, saturated with unsaturated polyester (UPES) resin, containing bis(2,4,6-trimethylbenzoyl)phenylphosphine as photoinitator at 1% by weight, based on the weight of the entire formulation.

Excellent surface cure and through cure are achieved with an LED light source centered at 390 nm at 240 mW/cm².

### Example 3 - thick coating

Thick acrylate coating formulations are prepared (10 mil [0.25 mm]) with difunctional epoxy acrylate and bis(2,4,6-trimethylbenzoyl)phenylphosphine as photoinitiator at 2% by weight, based on the weight of the entire formulation.

Excellent surface cure and through cure are achieved for each formulation with an LED light source centered at 390 nm at 240 mW/cm².

The photoinitiator in the examples 1-3 is replaced with a mixture of bis(2,4,6-trimethylbenzoyl)phenylphosphine oxide and 2,4,6,-trimethylbenzoylethoxyphenylphosphine oxide (CAS# 84434-11-7) in a weight:weight ratio of about 1:9; or a mixture of bis(2,4,6-trimethylbenzoyl)phenylphosphine oxide, 2,4,6,-trimethylbenzoylethoxyphenylphosphine oxide and 2-hydroxy-2-methyl-1-phenyl-1-propanone in a weight ratio of about 3.5:1.0:15.5; or a mixture of bis(2,4,6-trimethylbenzoyl)phenylphosphine oxide and 2-hydroxy-2-methyl-1-phenyl-1-propanone in a weight ratio of about 1:4, with excellent results.

## Claims

1. Process for curing ethylenically unsaturated polymerizable compounds for producing coatings, gel coats, composites, or adhesives having thick sections thicker than about 0.25 mm, wherein
the ethylenically unsaturated polymerizable compounds are
(a) a mixture of
(i) unsaturated polyesters and
(ii) acrylates, methacrylates, styrene or mixtures thereof,
or
(b) a mixture of
(i) unsaturated polyetser acrylates and
(ii) acrylates, methacrylates or combinations thereof,
wherein further
the process comprises adding to said compounds at least one acylphosphine oxide photoinitiator and irradiating the mixture so obtained with radiation from a light emitting diode source.

2. A process according to claim **1** wherein the acylphosphine oxide photoinitiator is a bisacylphosphine oxide or a monoacylphosphine oxide photoinitiator.

3. A process according to claim **1** wherein the acylphosphine oxide photoinitiator is at least one bisacylphosphine oxide photoinitiator of the formula I 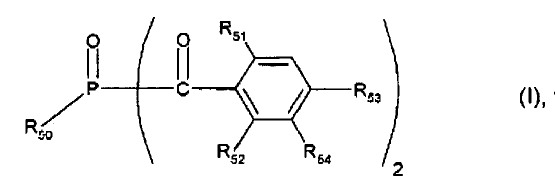 wherein
**R₅₀** is C₁-C₁₂ alkyl, cyclohexyl or phenyl which is unsubstituted or is substituted by 1 to 4 halogen or C₁-C₈ alkyl;
**R₅₁** and **R₅₂** are each independently of the other C₁-C₈ alkyl or C₁-C₈alkoxy;
**R₅₃** is hydrogen or C₁-C₈ alkyl; and
**R₅₄** is hydrogen or methyl.

4. A process according to claim **3** wherein the photoinitiator of the formula I **R₅₀** is C₂-C₁₀ alkyl, cyclohexyl or phenyl which is unsubstituted or is substituted by 1 to 4 C₁-C₄ alkyl, Cl or Br.

5. A process according to claim **3** where the bisacylphosphine oxide is bis(2,4,6-trimethylbenzoyl)phenylphosphine oxide (CAS# 162881-26-7) or bis(2,4,6-trimethylbenzoyl)-(2,4-bis-pentyloxyphenyl)phosphine oxide.

6. A process according to claim **1** wherein the acylphosphine oxide photoinitiator is at least one monoacylphosphine oxide photoinitiator of the formula II 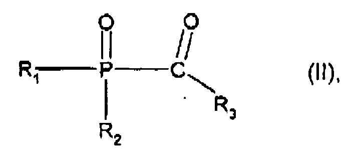 in which
**R₁** and **R₂** independently of one another are C₁-C₁₂alkyl, benzyl, phenyl which is unsubstituted or substituted from one to four times by halogen, C₁-C₈ alkyl and/or C₁-C₈ alkoxy, or are cyclohexyl or a group -COR₃, or
R₁ is -OR₄;
**R₃** is phenyl which is unsubstituted or substituted from one to four times by C₁-C₈ alkyl, C₁-C₈ alkoxy, C₁-C₈ alkylthio and/or halogen; and
**R₄** is C₁-C₈ alkyl, phenyl or benzyl.

7. A process according to claim 6 where in the photoinitiator of the formula II **R₁** is -OR₄.

8. A process according to claim 6 where the monoacylphosphine oxide is 2,4,6-trimethylbenzoylethoxyphenylphosphine oxide (CAS# 84434-11-7) or 2,4,6-trimethylbenzoyldiphenylphosphine oxide (CAS# 127090-72-6).

9. A process according to claim 1 wherein the acylphosphine photoinitiator is selected from the group consisting of
(i) a mixture of bis(2,4,6-trimethylbenzoyl)phenylphosphine oxide and 2,4,6,-trimethylbenzoylethoxyphenylphosphine oxide in weight:weight ratios between about 1:11 and about 1:7,
(ii) a mixture of bis(2,4,6-trimethylbenzoyl)phenylphosphine oxide, 2,4,6,-trimethylbenzoylethoxyphenylphosphine oxide and 2-hydroxy-2-methyl-1-phenyl-1-propanone in a weight:weight:weight ration between about 2:1:14 and about 5:2:17 and
(iii) a mixture of bis(2,4,6-trimethylbenzoyl)phenylphosphine oxide and 2-hydroxy-2-methyl-1-phenyl-1-propanone weight:weight ratios between about 1:3 and about 1:5.

10. A process according to claim **1** comprising adding at least one α-hydroxy ketone photoinitiator in addition to the acylphosphine oxide photoinitiator.

11. A process according to claim **10** where the α-hydroxy ketone photoinitiator is of the formula III 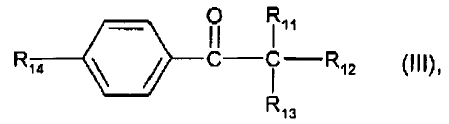 where
**R₁₁** and **R₁₂** independently of one another are hydrogen, C₁-C₆ alkyl, phenyl, C₁-C₆ alkoxy, OSiR₁₆(R₁₇)₂ or -O(CH₂CH₂O)_{q}-C₁-C₆ alkyl, or
R₁₁ and R₁₂, together with the carbon atom to which they are attached, form a cyclohexyl ring; **q** is a number from 1 to 20;
**R₁₃** is OH, C₁-C₁₆ alkoxy or -O(CH₂CH₂O)q-C₁-C₆ alkyl;
**R₁₄** is hydrogen, C₁-C₁₈ alkyl, C₁-C₁₂hydroxyalkyl, C₁-C₁₈ alkoxy, -OCH₂CH₂-OR₁₅, -CH=CH₂, - C(CH₃)=CH₂ or is 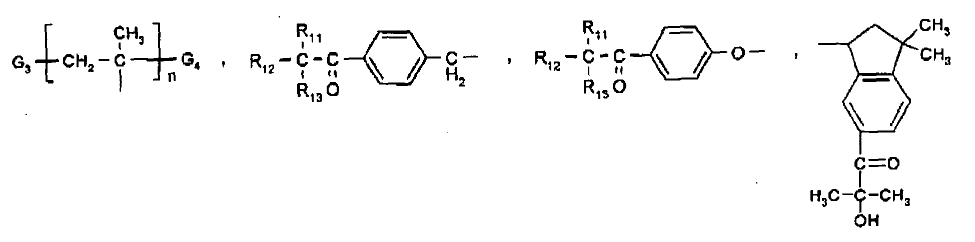 or 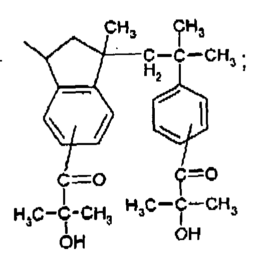 **n** is a number from 2 to 10;
**R₁₅** is hydrogen, -COCH=CH₂ or -COC(CH₃)=CH₂;
**R₁₆** and **R₁₇** independently of one another are C₁-C₆ alkyl or phenyl; and
**G₃** and **G₄** independently of one another are end groups of the polymeric structure.

12. A process according to claim **10** where the α-hydroxy ketone photoinitiator is selected from the group consisting of
α-hydroxycyclohexyl phenyl ketone,
2-hydroxy-2-methyl-1-phenylpropanone,
2-hydroxy-2-methyl-1-(4-isopropylphenyl)propanone,
2-hydroxy-2-methyl-1-(4-dodecylphenyl)propanone,
2-Hydroxy-1-{4-[4-(2-hydroxy-2-methyl-propionyl)-benzyl]-phenyl}-2-methyl-propan-1-one, and
2-hydroxy-2-methyl-1-[(2-hydroxyethoxy)phenyl]propanone.

13. A process according to claim **1** for producing acrylate based coatings, white gel coats and adhesive layers with a thickness greater than about 10 mils [0.25 mm], in particular with a thickness of from greater than about 10 mils [0.25 mm] to about 30 mils [0.75 mm].

14. A process according to claim **1** for producing composites with a thickness of greater than about 25 mil [0.64 mm], in particular with a thickness of from greater than about 25 mil [0.64 mm] to about 300 mil [7.6 mm].

15. A process according to claim **1** where the output of the light emitting diode source is centered at about 390 nm plus or minus about 30 nm.

## Patentansprüche

1. Verfahren zur Härtung ethylenisch ungesättigter polymerisierbarer Verbindungen zur Herstellung von Beschichtungen, Gelüberzügen, Verbundstoffen oder Klebstoffen mit dicken Querschnitten, die dicker als etwa 0,25 mm sind, wobei
es sich bei den ethylenisch ungesättigten polymerisierbaren Verbindungen handelt um
(a) eine Mischung von
(i) ungesättigten Polyestern und
(ii) Acrylaten, Methacrylaten, Styrol oder Mischungen davon,
oder
(b) eine Mischung von
(i) ungesättigten Polyesteracrylaten und
(ii) Acrylaten, Methacrylaten oder Kombinationen davon,
wobei weiterhin
das Verfahren das Zusetzen von mindestens einem Acylphosphinoxid-Photoinitiator zu den Verbindungen und das Bestrahlen der so erhaltenen Mischung mit Strahlung aus einer lichtemittierenden Diodenquelle umfasst.

2. Verfahren gemäß Anspruch 1, wobei der Acylphosphinoxid-Photoinitiator ein Bisacylphosphinoxid- oder ein Monoacylphosphinoxid-Photoinitiator ist.

3. Verfahren gemäß Anspruch 1, wobei der Acylphosphinoxid-Photoinitiator mindestens ein Bisacylphosphinoxid-Photoinitiator der Formel I 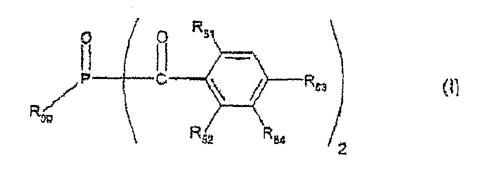 ist, worin
R₅₀ C₁-C₁₂-Alkyl, Cyclohexyl oder Phenyl ist, das unsubstituiert oder durch 1 bis 4 Halogen(e) oder C₁-C₈-Alkyl substituiert ist;
R₅₁ und R₅₂ jeweils unabhängig vom anderen C₁-C₈-Alkyl oder C₁-C₈-Alkoxy sind;
R₅₃ Wasserstoff oder C₁-C₈-Alkyl ist; und
R₅₄ Wasserstoff oder Methyl ist.

4. Verfahren gemäß Anspruch 3, wobei im Photoinitiator der Formel I
R₅₀ C₂-C₁₀-Alkyl, Cyclohexyl oder Phenyl ist, das unsubstituiert oder durch 1 bis 4 C₁-C₄-Alkyl, Cl oder Br substituiert ist.

5. Verfahren gemäß Anspruch 3, wobei das Bisacylphosphinoxid Bis(2,4,6-trimethylbenzoyl)phenylphosphinoxid (CAS# 162881-26-7) oder Bis(2,4,6-trimethylbenzoyl)-(2,4-bispentyloxyphenyl)phosphinoxid ist.

6. Verfahren gemäß Anspruch 1, wobei der Acylphosphinoxid-Photoinitiator mindestens ein Monoacylphosphinoxid-Photoinitiator der Formel II 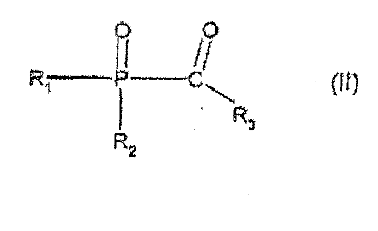 ist, worin R₁ und R₂ unabhängig voneinander C₁-C₁₂-Alkyl, Benzyl, Phenyl, das unsubstituiert oder ein- bis viermal durch Halogen, C₁-C₈-Alkyl und/oder C₁-C₈-Alkoxy substituiert ist, sind oder Cyclohexyl oder eine Gruppe -COR₃ sind, oder
R₁ -OR₄ ist;
R₃ Phenyl ist, das unsubstituiert oder ein- bis viermal durch C₁-C₈-Alkyl, C₁-C₈-Alkoxy, C₁-C₈-Alkylthio und/oder Halogen substituiert ist; und
R₄ C₁-C₈-Alkyl, Phenyl oder Benzyl ist.

7. Verfahren gemäß Anspruch 6, wobei im Photoinitiator der Formel II R₁ -OR₄ ist.

8. Verfahren gemäß Anspruch 6, wobei das Monoacylphosphinoxid 2,4,6-Trimethylbenzoylethoxyphenylphosphinoxid (CAS# 84434-11-7) oder 2,4,6-Trimethylbenzoyldiphenylphosphinoxid (CAS# 127090-72-6) ist.

9. Verfahren gemäß Anspruch 1, wobei der Acylphosphin-Photoinitiator aus der Gruppe gewählt ist, bestehend aus
(i) einer Mischung von Bis(2,4,6-trimethylbenzoyl)-phenylphosphinoxid und 2,4,6,-Trimethylbenzoylethoxyphenylphosphinoxid in Gewicht:Gewicht-Verhältnissen zwischen etwa 1:11 und etwa 1:7,
(ii) einer Mischung von Bis(2,4,6-trimethylbenzoyl)-phenylphosphinoxid, 2,4,6,-Trimethylbenzoylethoxyphenylphosphinoxid und 2-Hydroxy-2-methyl-1-phenyl-1-propanon in einem Gewicht:Gewicht:Gewicht-Verhältnis zwischen etwa 2:1:14 und etwa 5:2:17, und
(iii) einer Mischung von Bis(2,4,6-trimethylbenzoyl)-phenylphosphinoxid und 2-Hydroxy-2-methyl-1-phenyl-1-propanon bei Gewicht:Gewicht-Verhältnissen zwischen etwa 1:3 und etwa 1:5.

10. Verfahren gemäß Anspruch 1, welches das Zusetzen mindestens eines α-Hydroxyketon-Photoinitiators zusätzlich zum Acylphosphinoxid-Photoinitiator umfasst.

11. Verfahren gemäß Anspruch 10, wobei der α-Hydroxyketon-Photoinitiator die Formel III aufweist 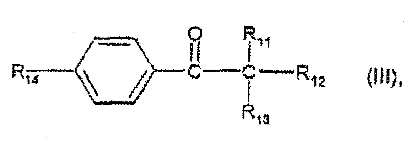 worin
R₁₁ und R₁₂ unabhängig voneinander Wasserstoff, C₁-C₆-Alkyl, Phenyl, C₁-C₆-Alkoxy, OSiR₁₆(R₁₇)₂ oder -O(CH₂CH₂O)_{q}-C₁-C₆-Alkyl sind, oder
R₁₁ und R₁₂, gemeinsam mit dem Kohlenstoffatom, an das sie gebunden sind, einen Cyclohexylring bilden;
q eine Zahl von 1 bis 20 ist;
R₁₃ OH, C₁-C₁₆-Alkoxy oder -O(CH₂CH₂O)_{q}-C₁-C₆-Alkyl ist;
R₁₄ Wasserstoff, C₁-C₁₈-Alkyl, C₁-C₁₂-Hydroxyalkyl, C₁-C₁₈-Alkoxy, -OCH₂CH₂-OR₁₅, -CH=CH₂, -C(CH₃)=CH₂ ist, oder 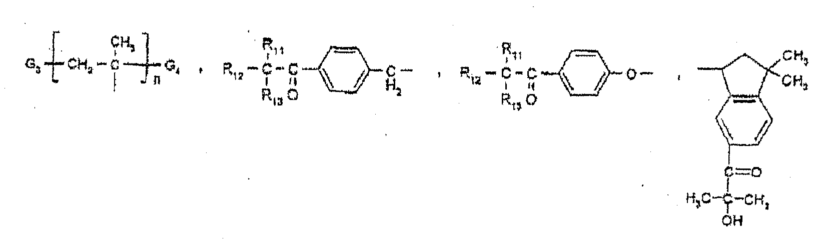 oder 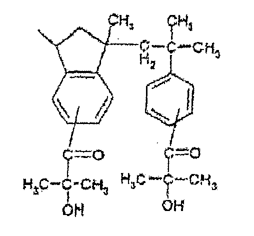 ist;
n eine Zahl von 2 bis 10 ist;
R₁₅ Wasserstoff, -COCH=CH₂ oder -COC(CH₃)=CH₂ ist;
R₁₆ und R₁₇ unabhängig voneinander C₁-C₈-Alkyl oder Phenyl sind; und
G₃ und G₄ unabhängig voneinander Endgruppen der polymeren Struktur sind.

12. Verfahren gemäß Anspruch 10, wobei der α-Hydroxyketon-Photoinitiator aus der Gruppe gewählt ist, bestehend aus
α-Hydroxycyclohexylphenylketon, 2-Hydroxy-2-methyl-1-phenylpropanon, 2-Hydroxy-2-methyl-1-(4-isopropylphenyl)propanon, 2-Hydroxy-2-methyl-1-(4-dodecylphenyl)propanon, 2-Hydroxy-1-{4-[4-(2-hydroxy-2-methyl-propionyl)-benzyl]-phenyl}-2-methyl-propan-1-on und 2-Hydroxy-2-methyl-1-[(2-hydroxyethoxy)phenyl]propanon.

13. Verfahren gemäß Anspruch 1 zur Herstellung von Acrylat-basierenden Beschichtungen, weißen Gelüberzügen und Klebstoffschichten mit einer größeren Dicke als etwa 10 mil [0,25 mm], insbesondere mit einer Dicke von mehr als etwa 10 mil [0,25 mm] bis etwa 30 mil [0,75 mm].

14. Verfahren gemäß Anspruch 1 zur Herstellung von Verbundstoffen mit einer größeren Dicke als etwa 25 mil [0,64 mm], insbesondere mit einer Dicke von mehr als etwa 25 mil [0,64 mm] bis etwa 300 mil [7,6 mm].

15. Verfahren gemäß Anspruch 1, wobei die Aussendung der lichtemittierenden Diodenquelle bei etwa 390 nm plus oder minus etwa 30 nm zentriert ist.

## Revendications

1. Procédé pour réticuler des composés polymérisables à insaturation éthylénique afin de produire des revêtements, des enduits gélifiés, des composites ou des adhésifs comportant des sections épaisses, d'épaisseur supérieure à environ 0,25 mm, dans lequel
les composés polymérisables à insaturation éthylénique sont
(a) un mélange
(i) de polyesters insaturés et
(ii) d'acrylates, de méthacrylates, de styrène ou de mélanges de ceux-ci,
ou
(b) un mélange
(i) d'acrylates de polyesters insaturés et
(ii) d'acrylates, de méthacrylates ou de combinaisons de ceux-ci,
le procédé comprenant en outre l'addition auxdits composés d'au moins un photoinitiateur à base d'oxyde d'acylphosphine et l'irradiation du mélange ainsi obtenu avec un rayonnement provenant d'une source à diodes électroluminescentes.

2. Procédé selon la revendication 1 dans lequel le photoinitiateur à base d'oxyde d'acylphosphine est un photoinitiateur à base d'oxyde de bisacylphosphine ou d'oxyde de monoacylphosphine.

3. Procédé selon la revendication 1 dans lequel le photoinitiateur à base d'oxyde d'acylphosphine est au moins un photoinitiateur à base d'oxyde de bisacylphosphine de formule I 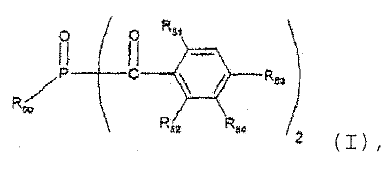 dans laquelle
R₅₀ représente un groupe alkyle en C₁-C₁₂, cyclohexyle ou phényle qui est non substitué ou substitué par 1 à 4 halogènes ou groupes alkyle en C₁-C₈ ;
R₅₁ et R₅₂ représentent chacun indépendamment de l'autre un groupe alkyle en C₁-C₈ ou alcoxy en C₁-C₈ ;
R₅₃ représente un hydrogène ou un groupe alkyle en C₁-C₈ ; et
R₅₄ représente un hydrogène ou un groupe méthyle.

4. Procédé selon la revendication 3 dans lequel, dans le photoinitiateur de formule I
R₅₀ représente un groupe alkyle en C₂-C₁₀, cyclohexyle ou phényle qui est non substitué ou substitué par 1 à 4 groupes alkyle en C₁-C₄, Cl ou Br.

5. Procédé selon la revendication 3 dans lequel l'oxyde de bisacylphosphine est l'oxyde de bis(2,4,6-triméthylbenzoyl)phénylphosphine (CAS n° 162881-26-7) ou l'oxyde de bis(2,4,6-triméthylbenzoyl)-(2,4-bis-pentyloxyphényl)phosphine.

6. Procédé selon la revendication 1 dans lequel le photoinitiateur à base d'oxyde d'acylphosphine est au moins un photoinitiateur à base d'oxyde de monoacylphosphine de formule II 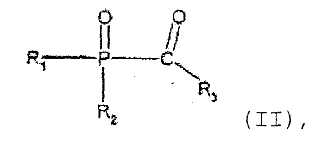 dans laquelle
R₁ et R₂, indépendamment l'un de l'autre, représentent un groupe alkyle en C₁-C₁₂, benzyle, phényle qui est non substitué ou substitué une à quatre fois par un halogène, un groupe alkyle en C₁-C₈ et/ou un groupe alcoxy en C₁-C₈, ou représentent un groupe cyclohexyle ou -COR₃, ou bien
R₁ représente -OR₄ ;
R₃ représente un groupe phényle qui est non substitué ou substitué une à quatre fois par un groupe alkyle en C₁-C₈, alcoxy en C₁-C₈, alkylthio en C₁-C₈ et/ou halogéno ; et
R₄ représente un groupe alkyle en C₁-C₈, phényle ou benzyle.

7. Procédé selon la revendication 6 dans lequel, dans le photoinitiateur de formule II
R₁ représente -OR₄.

8. Procédé selon la revendication 6 dans lequel l'oxyde de monoacylphosphine est l'oxyde de 2,4,6-triméthylbenzoyléthoxyphénylphosphine (CAS n° 84434-11-7) ou l'oxyde de 2,4,6-triméthylbenzoyldiphénylphosphine (CAS n° 127090-72-6).

9. Procédé selon la revendication 1 dans lequel le photoinitiateur à base d'acylphosphine est choisi dans le groupe constitué par
(i) un mélange d'oxyde de bis(2,4,6-triméthylbenzoyl)phénylphosphine et d'oxyde de 2,4,6-triméthylbenzoyléthoxyphénylphosphine dans un rapport pondéral compris entre environ 1 : 11 et environ 1 : 7,
(ii) un mélange d'oxyde de bis(2,4,6-triméthylbenzoyl)phénylphosphine, d'oxyde de 2,4,6-triméthylbenzoyléthoxyphénylphosphine et de 2-hydroxy-2-méthyl-1-phényl-1-propanone dans un rapport pondéral compris entre environ 2 : 1 : 14 et environ 5 : 2 : 17, et
(iii) un mélange d'oxyde de bis(2,4,6-triméthylbenzoyl)phénylphosphine et de 2-hydroxy-2-méthyl-1-phényl-1-propanone dans un rapport pondéral compris entre environ 1 : 3 et environ 1 : 5.

10. Procédé selon la revendication 1 comprenant l'addition d'au moins un photoinitiateur à base d'α-hydroxycétone en plus du photoinitiateur à base d'oxyde d'acylphosphine.

11. Procédé selon la revendication 10 dans lequel le photoinitiateur à base d'α-hydroxycétone répond à la formule III 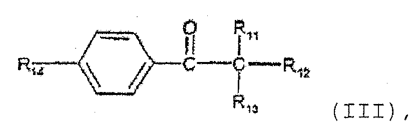 où
R₁₁ et R₁₂, indépendamment l'un de l'autre, représentent un hydrogène, un groupe alkyle en C₁-C₆, phényle, alcoxy en C₁-C₆, OSiR₁₆(R₁₇)₂ ou -O(CH₂CH₂O)_{q}-(alkyle en C₁-C₆), ou bien
R₁₁ et R₁₂, conjointement avec l'atome de carbone auquel ils sont attachés, forment un noyau cyclohexyle ;
q est un nombre valant de 1 à 20 ;
R₁₃ représente un groupe OH, alcoxy en C₁-C₁₆ ou -O(CH₂CH₂O)_{q}-(alkyle en C₁-C₆) ;
R₁₄ représente un hydrogène, un groupe alkyle en C₁-C₁₈, hydroxyalkyle en C₁-C₁₂, alcoxy en C₁-C₁₈, -OCH₂CH₂-OR₁₅, -CH=CH₂, -C(CH₃)=CH₂ ou 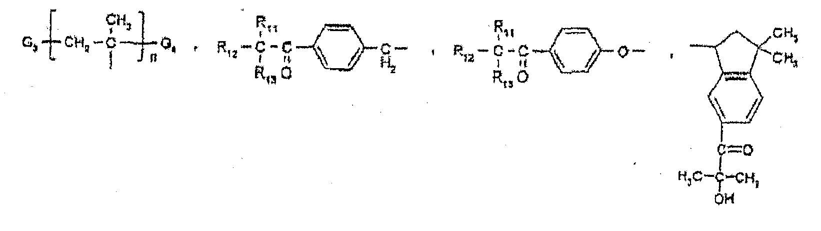 ou 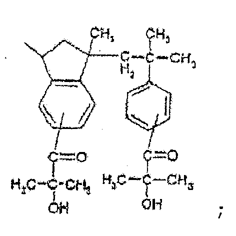 n est un nombre valant de 2 à 10 ;
R₁₅ représente un hydrogène, -COCH=CH₂ ou -COC(CH₃)=CH₂ ; R₁₆ et R₁₇, indépendamment l'un de l'autre, représentent un groupe alkyle en C₁-C₈ ou phényle ; et
G₃ et G₄, indépendamment l'un de l'autre, représentent des groupes terminaux de la structure polymère.

12. Procédé selon la revendication 10 dans lequel le photoinitiateur à base d'α-hydroxycétone est choisi dans le groupe constitué par
l'α-hydroxycyclohexylphénylcétone,
la 2-hydroxy-2-méthyl-1-phénylpropanone,
la 2-hydroxy-2-méthyl-1-(4-isopropylphényl)propanone, la 2-hydroxy-2-méthyl-1-(4-dodécylphényl)propanone, la 2-hydroxy-1-{4-[4-(2-hydroxy-2-méthyl-propionyl)-benzyl]-phényl}-2-méthyl-propan-1-one, et
la 2-hydroxy-2-méthyl-1-[(2-hydroxyéthoxy)phényl]-propanone.

13. Procédé selon la revendication 1 pour produire des revêtements, des enduits gélifiés blancs et des couches adhésives à base d'acrylate avec une épaisseur supérieure à environ 10 mils (0,25 mm), en particulier avec une épaisseur de plus d'environ 10 mils (0,25 mm) à environ 30 mils (0,75 mm).

14. Procédé selon la revendication 1 pour produire des composites avec une épaisseur supérieure à environ 25 mils (0,64 mm), en particulier avec une épaisseur de plus d'environ 25 mils (0,64 mm) à environ 300 mils (7,6 mm).

15. Procédé selon la revendication 1 dans lequel la sortie de la source à diodes électroluminescentes est centrée sur environ 390 nm plus ou moins environ 30 nm.
